# EUROPEAN PATENT APPLICATION

(11) **EP 1 138 586 A2**
(43) Date of publication of application: **04.10.2001**
(21) Application number: 00118370.6
(22) Date of filing: 24.08.2000
(51) Int. Cl.: B62K 3/00

(54) **Skateboard**

(30) Priority: 30.03.2000 JP 2000092564
(71) Applicant: Atras Auto Co., Ltd., Ibaraki-shi, Osaka 567-0865 (JP)
(72) Inventor: Yamabe, Hideyasu, Osaka-shi, Osaka 532-0004 (JP); Tsai, Shui Te, Changhua (TW)
(74) Representative: Kloiber, Thomas, Dr. Dipl.-Phys.

(57) **Abstract**

A skateboard having running-purpose wheels (5, 23) at the front and rear ends of a board main body (1) is so designed that even if the ground surface for running is uneven, a shock transmitted to the front end wheel (5) is moderated, thereby to improve the running stability. In the skateboard having running-purpose wheels (5, 23) at the front and rear ends of a board main body (1) and a handle shaft (2) extending upward from the front end wheel (5), a front fork (6) which is approximately inverted U-shaped as seen from the front is fixed at the upper end thereof to the lower end of the handle shaft (2) vertically extending through a sleeve portion (4) of a handle shaft attaching member (3); rear ends of brackets (10) positioned on opposite sides of the front end wheel (5) overlap the rear lower ends of plate portions (6a) forming opposite sides of the front fork (6) such that the brackets (10) are pivotally connected to the front fork (6) by means of shafts (11) in these overlapped regions and the front end wheel (5) is attached to the front lower ends of the brackets (10) through the shafts (11) to be turnable around a horizontal axis; and elastic bodies are attached as suspension means between the plate portions (6a) on opposite sides of the front fork (6) and the brackets (10) on opposite sides of the front end wheel (5).

## Description

### TECHNICAL FIELD

The present invention relates to a skateboard having running-purpose wheels at the front and rear ends of a board main body, and a handle shaft extending upward from the front end wheel.

### BACKGROUND ART

Heretofore, there has been known a skateboard that has running-purpose wheels at the front and rear ends of a board main body on which a rider puts one foot, a handle shaft extending upward from the front end wheel, and a handle at the upper end of the handle shaft. Such skateboard is driven to run by the rider gripping the handle, putting his one foot on the board main body, and kicking the ground with his the other foot. During running, if uneven ground is encountered, a shock transmitted to the front end wheel is violent, presenting a problem that the running stability is degraded.

### DISCLOSURE OF THE INVENTION

The present invention solves the problem and has an object to provide a skateboard having running-purpose wheels at the front and rear ends of a board main body so that even if the ground or the surface for running is uneven, a shock transmitted to the front end wheel is moderated thereby to improve the running stability.

The subject matter of the invention to achieve this object is as follows:
1. A skateboard having running-purpose wheels at the front and rear ends of a board main body, and a handle shaft extending upward from the front end wheel, wherein a front fork which is approximately inverted U-shaped as seen from the front is fixed at the upper end thereof to the lower end of the handle shaft vertically extending through a sleeve portion of a handle shaft attaching member, wherein rear ends of brackets positioned on opposite sides of the front end wheel overlap the rear lower ends of plate portions forming opposite sides of the front fork such that the brackets are pivotally connected to the front fork by means of shafts in these overlapped regions and the front end wheel is attached to the front lower ends of the brackets through shafts to be turnable around a horizontal axis, and wherein elastic bodies are attached as suspension means between the plate portions on opposite sides of the front fork and the brackets on opposite sides of the front end wheel.
2. A skateboard as described in 1, wherein the elastic bodies are coil springs.
3. A skateboard described in 1, wherein the elastic bodies are rubber elastic bodies.

Thus, in the present invention, the front end wheel is rotatably attached to the brackets elastically supported by elastic bodies, such as coil springs or rubber elastic bodies, with respect to the front fork; therefore, even if the ground surface for running is uneven, a shock transmitted to the front end wheel is moderated by the elastic bodies, thereby improving the running stability.

### BRIEF DESCRIPTION OF THE DRAWINGS

Fig. 1 is an overall perspective view of a skateboard according to a first embodiment of the invention;
Fig. 2 is an enlarged exploded perspective view of a portion for attaching a wheel on the front end side of the skateboard;
Fig. 3 is an enlarged perspective view of the portion for attaching the wheel on the front end side of the skateboard;
Fig. 4 is an enlarged side view of the portion for attaching the wheel on the front end side of the skateboard;
Fig. 5 is an enlarged side view of the portion for attaching the wheel on the front end side of the skateboard when the wheel at the front end of the skateboard is shocked by the unevenness of the ground;
Fig. 6 is a perspective view of the skateboard in a folded state;
Fig. 7 is an enlarged perspective view of the front end side when the skateboard is folded; and
Fig. 8 is an enlarged side view of a portion for attaching a wheel on the front end side of the skateboard according to a second embodiment of the invention.

### EMBODIMENTS

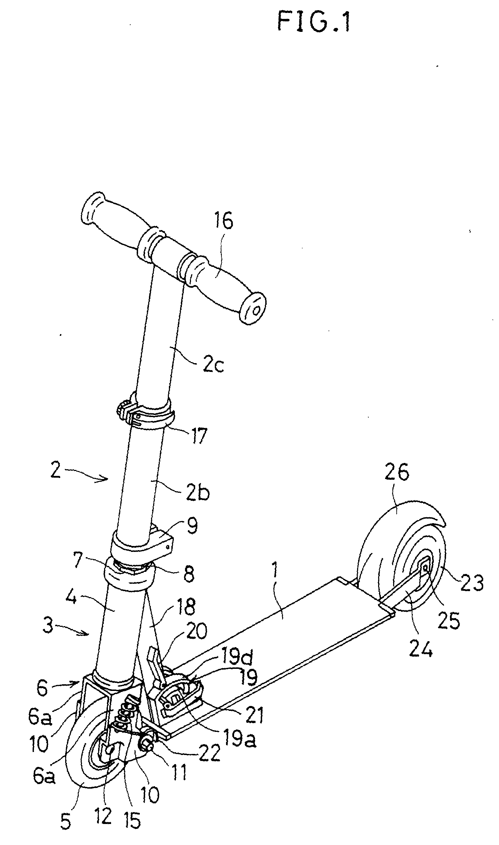

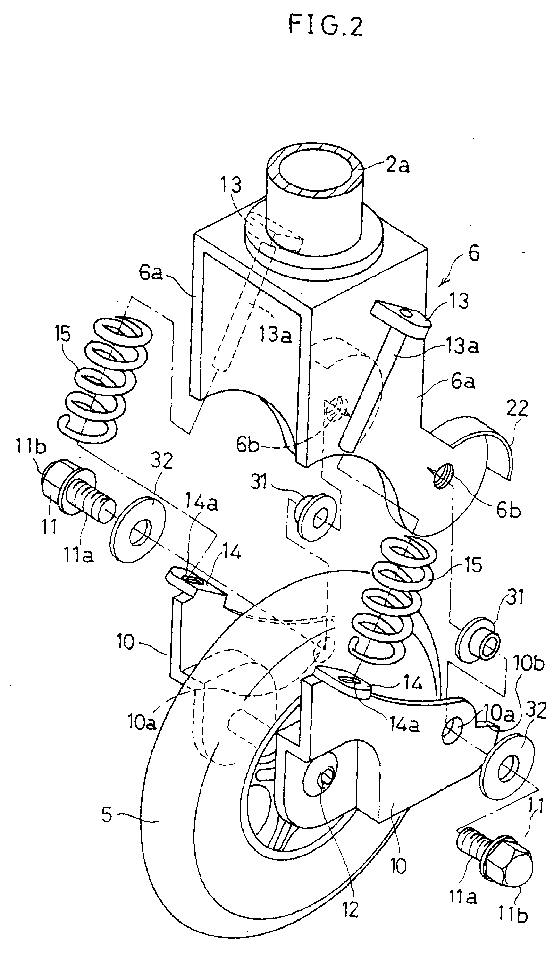

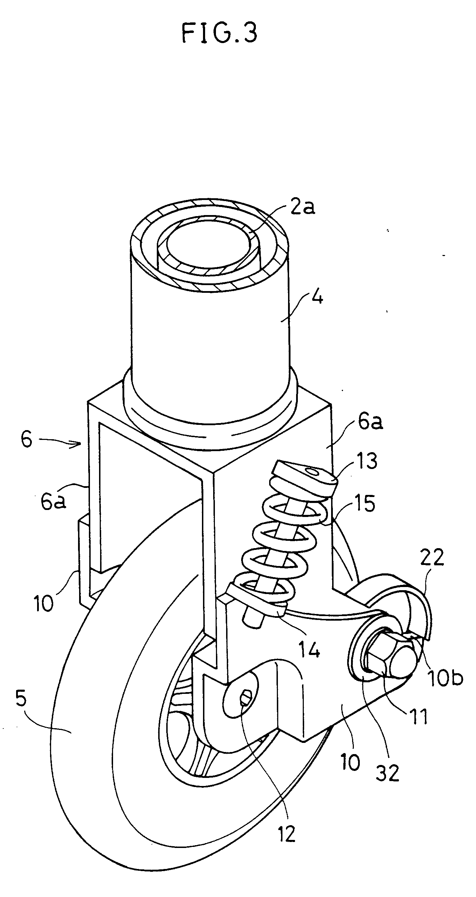

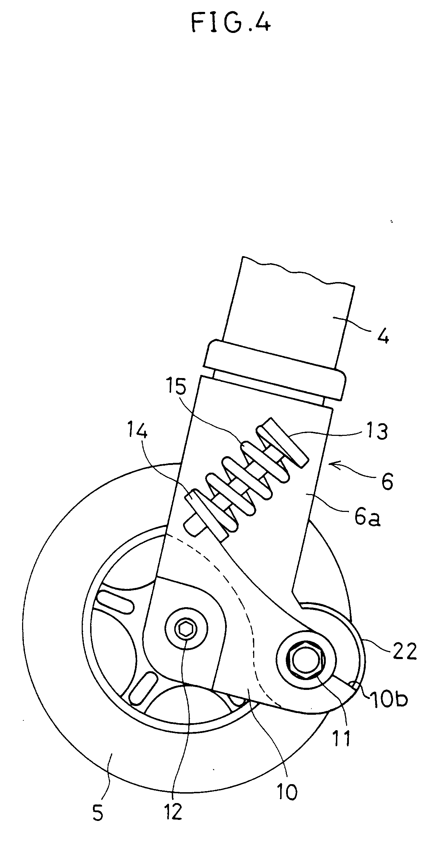

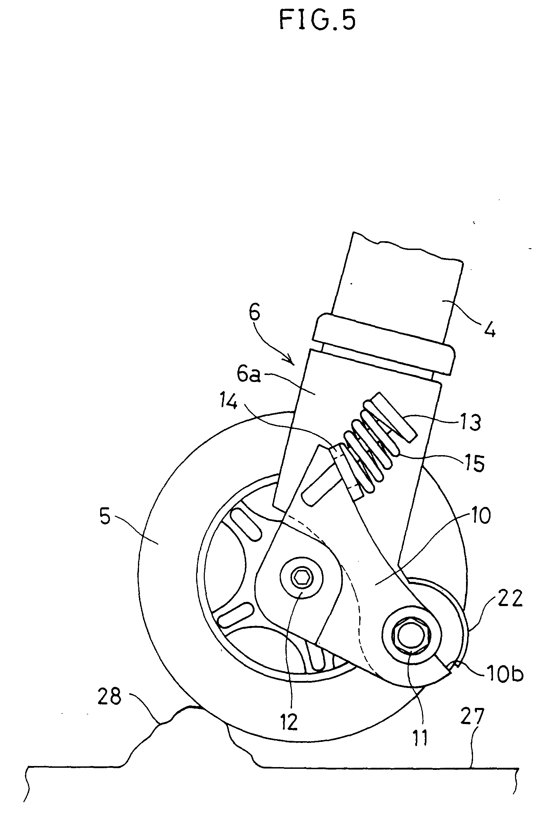

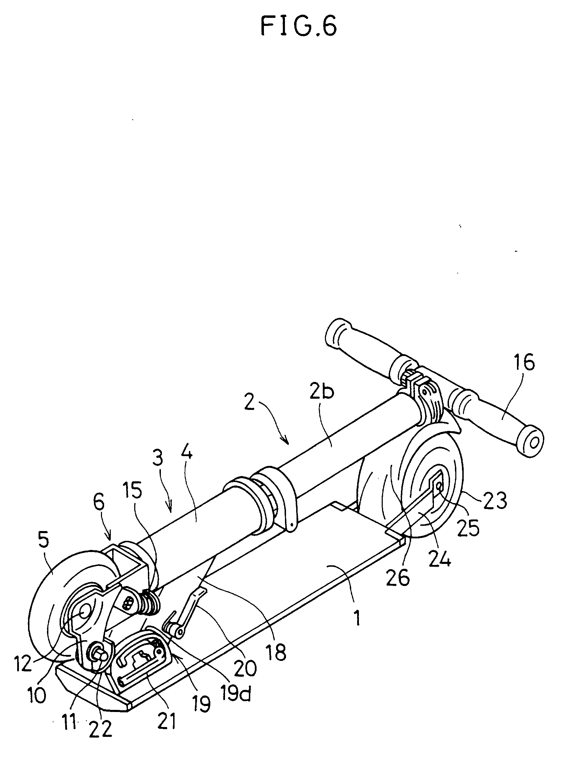

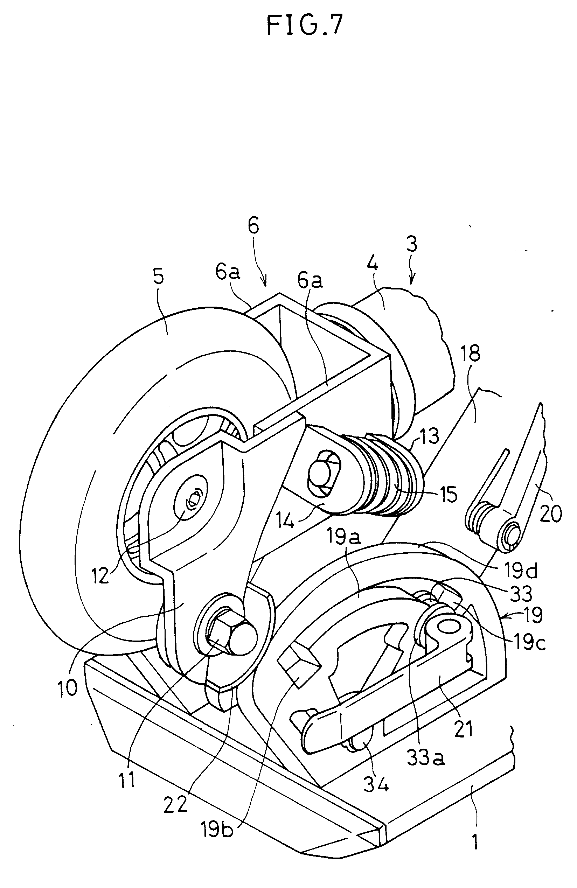

Figs. 1 - 7 show a first embodiment of the invention.

In Figs. 1 - 7, reference numeral 1 denotes a board main body on which one foot is put, the front end of said board main body 1 being provided with a handle shaft attaching member 3 for attaching a telescopic handle shaft 2 composed of first through third handle shaft portions 2a through 2c. Inserted into the sleeve portion 4 of the handle shaft attaching member 3 from below is a first handle shaft portion 2a for fixing the upper end of a front fork 6 which is approximately inverted U-shaped as seen from the front and adapted to support at its lower end a front end wheel 5 to be rotatable around a horizontal axis. A clamp nut 7 and a lock nut 8 are threadedly fitted on the threaded portion of the upper end of the first handle shaft portion 2a projecting upward beyond the upper end of the sleeve portion 4. The upper end of the first handle shaft portion 2a projecting upward beyond these nuts 7 and 8 has fitted thereon the lower end of the second handle shaft portion 2b, and the first and second handle shaft portions 2a and 2b are joined together by a clamp member 9. The third handle shaft portion 2c is inserted from above into the second handle shaft portion 2b. The rear ends of brackets 10 positioned to hold the front end wheel 5 therebetween overlap, from outside, the rear lower ends of plate portions 6a on opposite sides of a front fork 6 fixed to the lower end of said first handle shaft portion 2a, and the brackets 10 are pivotally connected to the front fork 6 by shafts 11 in the overlapped regions.

More particularly, each of the plate portions 6a on opposite sides of the front fork 6 is formed with a threaded hole 6b for threadedly receiving an externally threaded portion 11a of a shaft 11. The externally threaded portion 11a of the shaft 11 is inserted in a collar 31 set in a hole 10a in the bracket 10 and is threadedly fitted in said threaded hole 6b, and a head 11b of the shaft 11 is abutted against the outer surface of the bracket 10 through a washer 32, whereby the pivotal connection of the bracket 10 to the front fork 6 is completed. And the front end wheel 5 is rotatably attached to the front lower ends of said brackets 10 through an axle 12, and coil springs 15 for suspension are installed between supports 13 in the vicinity of the upper ends of the plate portions 6a on opposite sides of said front fork 6 and supports 14 on the front upper ends of the brackets 10 on opposite sides of the front end wheel 5.

Designated at 13a are shafts installed on the side of the supports 13 of the plate portions 6a on opposite sides of said front fork 6, and the coil springs 15 are installed to surround said shafts 13a, the lower ends of said shafts 13a extending through elongated openings 14a in the supports 14 of said brackets 10. When the front fork 6 is turned relative to the brackets 10 around the shafts 11 in a direction to increase the distance between said supports 13 and 14, the lower ends of the shafts 13a tend to move upward to slip out of the elongated openings 14a in the supports 14 of the brackets 10; however, in this embodiment, the rear ends of the brackets 10 are formed from above with notches 10b which abut from below against abutment members 22, which will be described later, at the plate portions 6a on opposite sides of the front fork 6, thereby preventing the shafts 13a from slipping out of the elongated openings 14a in the supports 14 of the brackets 10.

In this connection, as described above, the handle shaft 2 composed of the first through third handle shaft portions 2a through 2c is supported by the sleeve portion 4 of the handle shaft attaching member 3 such that it is inclined rearward at a slight angle. The third handle shaft portion 2c is telescopically received in the second handle shaft portion 2b, and a handle 16 is attached to the upper end of the third handle shaft portion 2c at right angles. Reference numeral 17 denotes a lock lever installed on the upper end of the second handle shaft portion 2b for locking the third handle shaft portion 2c immovable relative to the second handle shaft portion 2b when the third handle shaft portion 2c has been drawn from the second handle shaft portion 2b to a necessary height or when the third handle shaft portion 2c has been stored in the second handle shaft portion 2b.

The handle shaft 2 composed of the first through third handle shaft portions 2a through 2c is adapted to integrally rotate relative to the sleeve portion 4, as described above. And the handle shaft 2 of such construction is adapted to be folded such that the handle shaft 2 together with the handle shaft attaching member 3 rests on the board main body 1 with the third handle shaft portion 2c contracted as being stored in the second handle shaft portion 2b.

More particularly, a connecting frame 18 integrally attached to and extending rearwardly obliquely downward from the sleeve portion 4 of the handle shaft attaching member 3 is guided with respect to the front end of the board main body 1 by an axle 33 movable along arcuate guide holes 19a formed in a pair of guide brackets 19 fixed to the board main body 1 on opposite sides of the connecting frame 18 and is supported to be swingable around a horizontal axis 34. It is so arranged that locking is effected in two states: a state in which the handle shaft 2 erected and ready for use with the axle 33 fitted in recesses 19b formed at one of the respective ends of the arcuate guide holes 19a; and a state in which the handle shaft 2 and the handle shaft attaching member 3 are folded and resting on the board main body 1 with the axle 33 fitted in recesses 19c formed in the other ends of the arcuate guide holes 19a.

Reference numeral 20 denotes an operating lever for raising said axle 33 from the recesses 19b at one of the respective ends of the arcuate guide hole 19a and the recesses 19c at the other ends when the handle shaft attaching member 3 is turned upright or down flat, and reference numeral 21 denotes a lock lever attached to one end of the axle 33 such that flanges 33a on the opposite ends of said axle 33 are pressed against the outer surfaces of said pair of guide brackets 19 so as to effect locking in the state in which the handle shaft 2 is erected and ready for use and in the state in which the handle shaft 2 and the handle shaft attaching member 3 are folded and resting on the board main body 1.

Further, in this embodiment, the abutment members 22 are disposed rearward of the pivotal connections of the front fork 6 with the rear ends of the brackets 10 in the rear lower ends of the plate portions 6a on opposite sides of said front fork 6, and are positioned on the end surfaces of the plate portions 6a on opposite sides of the front fork 6 in an arcuately curved fashion. It is so arranged that said abutment members 22 abut against the upper end arcuate surfaces 19d of the guide brackets 19 when the skateboard is folded.

Next, a wheel attaching member 24 for attaching a rear end wheel 23 is installed at the rear end of said board main body 1 to project rearward from the board main body 1, and the rear end wheel 23 is attached to said wheel attaching member 24 by shafts 25 such that the rear end wheel is rotatable around a horizontal axis. As described above, in the state in which the handle shaft 2 is ready for use being in the upright position, the upper ends of the wheels 5 and 23 disposed at the front and rear ends of the bard main body 1 project above the upper surface of the board main body 1. And a cover-like brake plate 26 is attached to the rear end of the board main body 1 in such a manner as to cover the upper side of the rear end wheel 23. The brake plate 26 is urged by a spring (not shown) in a direction in which the brake plate is caused to somewhat float up above the upper end of the rear end wheel 23. It is so arranged that brake is effected by stepping on the brake plate 26 to press the upper end of the rear end wheel 23.

In the above arrangement, since the front end wheel 5 is rotatably attached to the brackets 10 elastically supported with respect to the front fork 6 by the coil springs 15, even if there is unevenness 28 on the ground 27 or the surface for running, the shock transmitted to the front end wheel 5 is moderated by the coil springs 15, so that running stability can be improved.

Further, in the state in which the skateboard is folded, the abutment members 22 installed on the plate portions 6a on opposite sides of the front fork 6 abut against the upper end arcuate surfaces 19a of the pair of guide brackets 19; therefore, in this folded state, there is no possibility that the handle shaft 2, the front end wheel 5 and so on would oscillate around the axis of the sleeve portion 4 of the handle shaft attaching member 3, so that the folded position is stabilized.

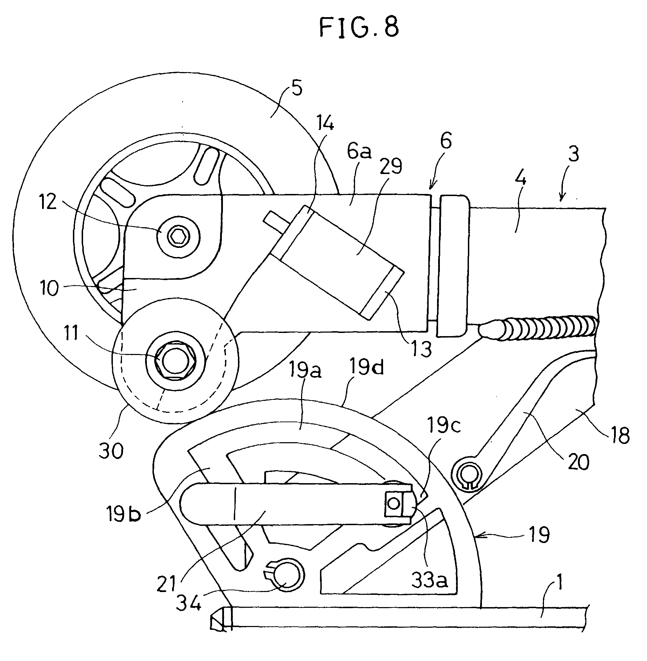

Fig. 8 shows a second embodiment of the invention.

In this second embodiment, the coil springs 15 of the first embodiment described above is replaced by rubber elastic bodies 29 disposed between the supports 13 in the vicinity of the upper ends of the plate portions 6a on opposite sides of the front fork 6 and the supports 14 at the front upper ends of the brackets 10 on opposite sides of the front end wheel 5. Further, rubber rings 30 are attached to the opposite ends of the shafts 11 pivotally connecting the brackets 10 to the front fork 6. In the folded state of the skateboard, the rubber rings 30 abut against the upper end arcuate surfaces 19d of the pair of guide brackets 19; this makes it possible to obtain the same effect as in the first embodiment.

## Claims

1. A skateboard having running-purpose wheels (5, 23) at the front and rear ends of a board main body (1) and a handle shaft (2) extending upward from the front end wheel (5),
wherein a front fork (6) which is approximately inverted U-shaped as seen from the front is fixed at the upper end thereof to the lower end of the handle shaft (2) vertically extending through a sleeve portion (4) of a handle shaft attaching member (3),
wherein rear ends of brackets (10) positioned on opposite sides of the front end wheel (5) overlap the rear lower ends of plate portions (6a) forming opposite sides of the front fork (6) such that the brackets (10) are pivotally connected to the front fork (6) by means of shafts (11) in these overlapped regions and the front end wheel (5) is attached to the front lower ends of the brackets (10) through the shafts (11) to be turnable around a horizontal axis, and
wherein elastic bodies are attached as suspension means between the plate portions (6a) on opposite sides of the front fork (6) and the brackets (10) on opposite sides of the front end wheel (5).

2. A skateboard as set forth in Claim 1, wherein the elastic bodies are coil springs (15).

3. A skateboard as set forth in Claim 1, wherein the elastic bodies are rubber elastic bodies (29).
